Europäisches Patentamt

European Patent Office

Office européen des brevets

(19)

(11) Veröffentlichungsnummer: **0 236 780 B1**

(12) **EUROPÄISCHE PATENTSCHRIFT**

(45) Veröffentlichungstag der Patentschrift: **19.02.92**

(21) Anmeldenummer: **87102075.6**

(22) Anmeldetag: **13.02.87**

(51) Int. Cl.⁵: **H04M 3/36**, H04Q 3/545, G06F 11/00

(54) **Verfahren zum Betrieb einer fehlergesicherten und hochverfügbaren Multiprozessor-Zentraleinheit eines Vermittlungssystemes.**

(30) Priorität: **12.03.86 DE 3608271**
**24.07.86 DE 3625033**

(43) Veröffentlichungstag der Anmeldung:
**16.09.87 Patentblatt 87/38**

(45) Bekanntmachung des Hinweises auf die Patenterteilung:
**19.02.92 Patentblatt 92/08**

(84) Benannte Vertragsstaaten:
**AT BE CH DE FR GB IT LI NL SE**

(56) Entgegenhaltungen:
**FR-A- 2 460 007**

**TELCOM REPORT, Band 4, Heft 3, Juni 1981, Seiten 233-240, Passau, DE; H. DITTMAR et al.: "Verkehrsmessung im öffentlichen Digitalvermittlungssystem EWSD"**

**INTERNATIONAL SWITCHING SYMPOSIUM, 7.-11. Mai 1979, Paris, FR, Seiten 178-186; G.J. GARWOOD: "Diagnostic de faute dans l'autocommutateur CPE type Pathfinder"**

(73) Patentinhaber: **SIEMENS AKTIENGESELL-SCHAFT**
**Wittelsbacherplatz 2**
**W-8000 München 2(DE)**

(72) Erfinder: **Bitzinger, Rudolf, Dipl.-Ing.**
**Lechbruckerstrasse 11**
**W-8000 München 71(DE)**
Erfinder: **Engl, Walter, Dipl.-Ing.**
**Am Kellerberg 4**
**W-8152 Feldkirchen(DE)**
Erfinder: **Humml, Siegfried**
**An der Freiheit 130**
**W-8122 Penzberg(DE)**
Erfinder: **Schreier, Klaus, Dipl.-Ing.**
**Nonnenwaldstrasse 8a**
**W-8122 Penzberg(DE)**

**Beschreibung**

Die Erfindung betrifft eine Weiterentwicklung des im Oberbegriff des Patentanspruches 1 definierten speziellen Verfahrens, das für sich der deutschen Patentanmeldung mit der Veröffentlichungsnummer
DE-A-33 34 797.
entspricht. Spezielle andere Aspekte von Beispielen dieser Zentralsteuereinheit, auf die das erfindungsgemäß weiterentwickelte Verfahren ebenfalls anwendbar ist, sind in mehreren anderen deutschen Patentanmeldungen angegeben, vgl. die Veröffentlichungsnummern
DE-A-33 34 792,
DE-A-33 34 765,
DE-A-33 34 766,
DE-A-33 34 796,
DE-A-33 34 773,
DE-A-33 19 710, sowie
DE-A-33 23 577.

Die erfindungsgemäße Weiterentwicklung stellt nämlich im Grunde auch eine Weiterentwicklung dieser den anderen Patentanmeldungen entnehmbaren Verfahrensbeispiele der Zentralsteuereinheit dar.

Eine solche Zentralsteuereinheit soll extrem fehlertolerant sein, d.h. auftretende Fehler sollen sehr rasch erkannt und fehlerhafte und ausreichend fehlerverdächtige Organe der Zentralsteuereinheit möglichst rasch eliminiert sein, bevor aus dem Fehler weitere Fehler entstehen, die den Betrieb des Vermittlungssystemes beeinträchtigen könnten. Daher sind bei dieser Zentralsteuereinheit normalerweise die zentralen Prozessoren, das Bussystem und die Speicherblöcke jeweils für sich gedoppelt und fehlergesichert mikrosynchron parallel betrieben, abgesehen von einem evtl. tolerierten gewissen Schlupf zwischen den parallel betriebenen Bestandteilen. Nach Möglichkeit sollte ein fehlerhaftes, oder z.B. unterdimensioniertes und daher überlastetes Organ mehr oder weniger präzise lokalisierbar bzw. identifizierbar sein, und zwar schon lange, bevor es zu irgendwelchen ernsthafteren Beeinträchtigungen des Vermittlungsbetriebes kommt, damit schon lange vorher im Zuge normaler Wartungen Gegenmaßnahmen getroffen werden können. - Die vollautomatische Selbstabschaltung eines sich selbst als fehlerhaft indentifizierenden Organes genügt also nicht.

Außerdem soll eine solche Zentralsteuereinheit, trotz der extrem hohen Fehlertoleranz, auch noch eine extrem hohe Verfügbarkeit aufweisen, d.h. sie soll möglichst höchstens während weniger Sekunden oder Minuten pro Jahr - trotz ununterbrochenen Betriebes - irgendwelche gravierende Störungen aufweisen, und zwar möglichst auch in extremen Stoßbetriebszeiten. Dabei fluktuiert sowohl die Anzahl als auch das individuelle Verhalten der Teilnehmer des Vermittlungssystemes ständig, einmal schwächer einmal stärker. Das Vermittlungssystem soll also trotzdem auch unter Höchstbelastung möglicht zuverlässig und möglichst voll verfügbar sein. Auch die zentralen Prozessoren der Zentralsteuereinheit sollen also trotz eventueller Fehler möglichst nie einen völligen Zusammenbruch des Vermittlungsbetriebes auslösen.

Die Aufgabe der Erfindung,
* bei Bedarf gezielte Hinweise für die Diagnose von Hard-und Softwarefehlern, von Überdimensionierungen und von Unterdimensionierungen der verschiedenen, mit den Prozessoren zusammenarbeitenden Organen, sowie der Prozessoren selbst, zur Verfügung zu stellen,
* um bei Bedarf eine rasche nachträgliche Reparatur oder Umdimensionierung von einzelnen fehlerbehafteten, fehlerverdächtigen oder fehldimensionierten Teilen der Zentralsteuereinheit zu ermöglichen,
wird durch die im Patentanspruch 1 angegebenen Maßnahmen erleichtert.

Die in den Unteransprüchen angegebenen zusätzlichen Maßnahmen gestatten, zusätzliche Vorteile zu erreichen. So gestatten nämlich die Maßnahmen gemäß Patentanspruch
2, Hinweise auf fehlerhafte, fehlerverdächtige, überdimensionierte oder unterdimensionierte Organe zu erhalten,
3, Hinweise auf fehlerhafte oder fehlerverdächtige Prozessoren, sowie auf Fehlerverdächtigkeiten der Software oder der Hardware der Zentralsteuereinheit bei der Zuteilung und bei der Bearbeitung von Vermittlungsaufträgen an Prozessoren zu erhalten, z.B. auch Hinweise darauf, ob gewisse Vermittlungsaufträge nicht zu umfangreich sind, also ob nicht besser bestimmte unter diesen Aufträgen in - von verschiedenen Prozessoren gleichzeitig nebeneinander durchzuführende - Teilaufträge zerlegt werden sollten,
4, Hinweise auf Fehler oder Fehlerverdächtigkeiten der Software oder von Hardware-Organen der Zentralsteuereinheit, sowie auf Fehldimensionierungen in der Zusammenarbeit des betreffenden Prozessors mit den betreffenden Organen zu erhalten,
5, Hinweise auf Softwarefehler oder Hardwarefehler hinsichtlich jener Programmteile, die dem betreffenden Prozessor zur Verfügung stehen, zu erhalten, und
6, Fehler in der Software oder in der Hardware hinsichtlich der Zusammenarbeit des betreffenden Prozessors mit Speicherbereichen schneller lokalisieren bzw. typisieren zu können.

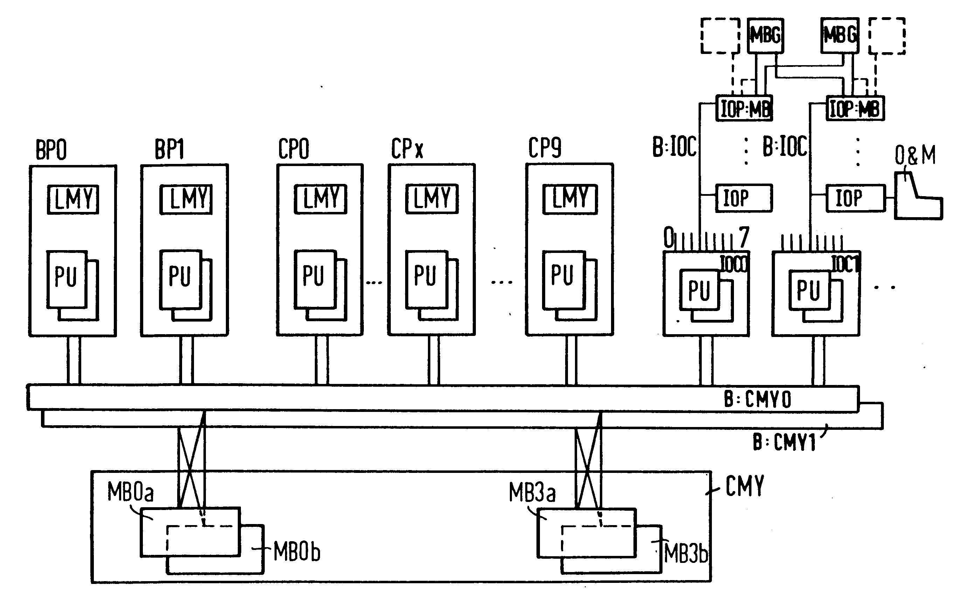

Die Erfindung wird anhand des in der Figur gezeigten Beispiels einer Zentralsteuereinheit weiter erläutert. Weil die Einzelheiten der Struktur und des Betriebes des in der Figur gezeigten Beispiels, sowie eine Vielzahl von jeweiligen Varianten davon, bereits unter vielen Aspekten in den verschiedenen oben genannten Patentanmeldungen sehr ausführlich beschrieben sind, brauchen hier nicht mehr alle Einzelheiten des in der Figur gezeigten Beispieles sowie seiner Varianten detailliert erläutert zu werden. Es genügt daher, hier nur noch auf die speziellen Eigenheiten des erfindungsgemäßen Verfahrens einzugehen.

Die Zentralsteuereinheit enthält also eine Vielzahl von zentralen Prozessoren, BP0, BP1, CP0....CP9, IOC0, IOC1 ...., welche parallel an das zentrale, in sich ebenfalls gedoppelte Bussystem B:CMY0/B:CMY1, hier zusammen mit vier Speicherblockpaaren MB0a/MB0b, ....MB3a/MB3b des zentralen Hauptspeichers CMY, angeschlossen sind. Die jeweils unterschiedliche momentane Vermittlungsaufträge bearbeitenden zentralen Prozessoren BP0, BP1, CP0....CP9, IOC1, IOC2.... enthalten in sich gedoppelte, ausreichend rasch arbeitende, - abgesehen von dem evtl. tolerierten gewissen Schlupf - mikrosynchron parallel betriebene Prozessorbaueinheiten PU, also z.B. käufliche 32-Bit-Mikroprozessorchips PU. Zumindest eine große Anzahl der zentralen Prozessoren BP....IOC1.... hat - z.B. wegen absichtlicher Adressenbegrenzung - vielleicht nicht zu allen Speicherblöcken MB, sondern z.B. nur zu einem der Speicherabschnitte in einem der Speicherblöcke, z.B. MB3a/MB3b, für einen Lese- und/oder Schreibbetrieb Zugriff.

Die Ursachen der Betriebsfehler mögen in der Hardware oder in der Software der jeweils betroffenen zentralen Prozessoren - evtl. auch in den mit ihnen zusammenarbeitenden sonstigen Organen der Zentralsteuereinheit - liegen. Zur Erleichterung einer späteren, für die nächste Wartung benötigten Diagnose der Betriebsfehlerursachen werden hierfür aussagekräftige verschiedene Kennwerte über die Belastungen, z.B. über auftraglose Totzeiten, von zumindest einen Großteil dieser Prozessoren BP....IOC...., einzeln für sich oder aufadiert, zumindest regelmäßig in definierten Zeitabständen -wenn nicht sogar kontinuierlich - in einem besonderen Speicherbereich protokolliert, z.B. in besonderen Registern oder vielleicht in einem der Speicherblockpaare MB des zentralen Speichers CMY, oder in einem lokalen speziellen Speicher des betreffenden Prozessors BP...IOC... Später werden in langen Zeitabständen, z.B. monatlich oder halbjährlich, die gespeicherten Kennwerte, z.B. in Form von Statistiken der verschiedenen protokollierten Kennwerte, an einer Ausgabeeinheit O&M des Wartungsdienstes ausgegeben.

Je zahlreicher und je verschiedener untereinander die protokollierten Kennwerte sind, umso leichter kann man aus den verschiedenen ausgegebenen Kennwerten klare Hinweise auf Fehler in der Hardware und in der Software, auch auf unnötige Überdimensionierungen und auf für die Verfügbarkeit gefährliche Unterdimensionierungen der verschiedenen Organe der Zentralsteuereinheit erhalten.

Erfahrungsgemäß ist es z.B. hierzu günstig, wenn ein Teil der Kennwerte jeweils der Länge von Warteschlangen entspricht, z.B. bei der in Zusammenarbeit der Prozessoren mit dem Arbitern des Bussystemes B:CMY0/B:CMY1. Ferner ist es günstig, wenn ein Teil der Kennwerte jeweils der Dauer von Auftragsbearbeitungen des betreffenden Prozessors, z.B. BP0, entspricht. Es ist auch günstig, wenn ein Teil der Kennwerte jeweils der Dauer und/oder der Anzahl der Belegungen von einem oder mehreren, mit dem betreffenden Prozessor, z.B. BP0, zusammenarbeitenden Drittorganen, z.B. von Speicherblöcken MB, vom Bussystem B:CMY der Zentralsteuereinheit entspricht, z.B. auch um Hinweise auf eine eventuelle Unterdimensionierung des Bussystemes B:CMY zu erhalten.

Wenn ein Teil der Kennwerte jeweils der Anzahl des Auftretens eines einen Notfall markierenden Kommandos entspricht,

* z.B. eines Kommandos, welches für das betreffende Organ verboten ist, z.B. eine verbotene Adresse betrifft,

* und/oder eines Kommandos, welches die Abschaltung eines wichtigen, wenngleich auch aus Sicherheit redundanten Organes, z.B. einer Prozessorbausteineinheit der beiden Prozessorbausteineinheiten eines zentralen Prozessors, betrifft,

* und/oder eines Kommandos, welches eine Bearbeitungswiederholung auslöst,

* und/oder eines Vorganges, welcher einer EDC-Korrektur entspricht,

* und/oder eines Kommandos, welches ein selten nötiges Teilprogramm, z.B. aus einem bestimmten Speicherabschnitt eines der zentralen Speicherblöcke MB oder eines lokalen Speicher LMY eines Prozessors aufruft,

dann stellen solche Kennwerte mehr oder weniger deutliche Hinweise auf entsprechende Softwarefehler oder Hardwarefehler in dem betreffenden Programmabschnitt oder in dem betreffenden Organ dar, und zwar ganz besonders dann, wenn gleichzeitig als zusätzliche Kennwerte, mehr oder weniger pauschal, ein oder mehrere Adressen von typischen, an Störungen beteiligten Kommandos, z.B. von entsprechenden aufgerufenen Speicherabschnitten, mitgespeichert werden.

Zusätzlich zu oder anstelle von den betreffenden Anzahlen können auch auslösende Anlässe als Kennwerte protokolliert werden, also z.B. Daten über Vorgänge, welche die Adressierung an sich verbotener Speicherabschnitte, die Abschaltung einer der beiden Prozessorbaueinheiten eines Prozessors, die Bearbeitungswiederholung, die EDC-Korrektur oder die Adressierung selten nötiger Teilprogramme auslösten.

**Patentansprüche**

1. Verfahren zum Betrieb einer eine Vielzahl von zentralen Prozessoren(BP0, BP1, CP0....CP9, IOC0, IOC1.....) enthaltenden, fehlergesicherten und hochverfügbaren Multiprozessor-Zentralsteuereinheit eines Vermittlungssystemes - z.B. eines Fernsprechvermittlungssystemes - , in welchem
   * an ein zentrales Bussystem(B:CMY0, B:CMY1)
     - ein oder mehrere
       # evtl. in sich gedoppelte und fehlergesichert, abgesehen von einem evtl. tolerierten gewissen Schlupf, mikrosynchron parallel betriebene Speicherblöcke(MB0a/MB0b, ... MB3a/MB3b) eines zentralen Hauptspeichers(CMY) sowie
     - die Vielzahl der jeweils unterschiedliche momentane Vermittlungsaufträge bearbeitenden,
       # evtl. in sich gedoppelten und dann - ebenfalls abgesehen von einem evtl. tolerierten gewissen Schlupf - mikrosynchron parallel betriebenen, zentralen Prozessoren(BP, CP, IOC) parallel angeschlossen sind, und
   * zumindest eine große Anzahl der zentralen Prozessoren (BP, CP, IOC) auf jeweils zumindest einen der Speicherabschnitte in einem der Speicherblöcke(z.B. MB3a/MB3b) für einen Lese- und/oder Schreibbetrieb Zugriff hat,
   **dadurch gekennzeichnet**, daß
   * als Hilfe zur Diagnose von Ursachen von Betriebsfehlern, die in einzelnen, jeweils betroffenen zentralen Prozessoren(BP, CP, IOC) auftreten, wobei die jeweilige Ursache auch außerhalb des betroffen zentralen Prozessors(BP, CP, IOC) liegen kann,
     - also auch evtl. in den mit ihnen zusammenarbeitenden sonstigen Organen der Zentralsteuereinheit, z.B. in einem der Speicherblöcke(z.B. in MB3b) des zentralen Hauptspeichers-(CMY) liegen kann,
   * Kennwerte über die Belastungen
     - z.B. über auftragslose Totzeiten - von zumindest einem Großteil dieser Prozessoren(BP, CP, IOC) einzeln für sich oder aufadiert zumindest regelmäßig in definierten Zeitabständen - wenn nicht sogar kontinuierlich - in besonderen Registern und/oder in einem besonderen Speicherbereich protokolliert werden, und
   * in langen Zeitabständen
     - z.B. monatlich oder nach Erreichen eines voreinstellbaren Zählerstandsschwellwertes eines Kennwertezählers- die gespeicherten Kennwerte
     - z.B. (nur) die Summe der protokollierten Kennwerte- an einer Ausgabeeinheit (O&M) ausgegeben werden.

2. Verfahren nach Patentanspruch 1,
   **dadurch gekennzeichnet**, daß
   * zumindest ein Teil der Kennwerte jeweils der Länge von einer Warteschlange entspricht.

3. Verfahren nach Patentanspruch 1 oder 2,
   **dadurch gekennzeichnet**, daß
   * zumindest ein Teil der Kennwerte jeweils der Dauer von Auftragsbearbeitungen des betreffenden Prozessors(z.B. BP) entspricht.

4. Verfahren nach einem der vorhergehenden Patentansprüche,
   **dadurch gekennzeichnet**, daß
   * zumindest ein Teil der Kennwerte jeweils der Dauer und/oder der Anzahl der Belegungen von einem oder mehreren, mit dem betreffenden Prozessor(z.B. BP) zusammenarbeitenden Drittorganen(MB3, B:CMY0) der Zentralsteuereinheit entspricht.

5. Verfahren nach einem der vorhergehenden Patentansprüche,
   **dadurch gekennzeichnet**, daß
   * zumindest ein Teil der Kennwerte jeweils der Anzahl und/oder der auslösenden Anlässe bestimmter Kommandos,
     - z.B. der Anzahl und/oder Anlässe von Adressierungen von für das betreffende Organ(BP, CP, IOC, B:MCY, IOP) an sich verbotenen Speicherabschnitten,
     - und/oder der Anzahl und/oder Anlässe von einen der beiden Prozessorbaueinheiten(PU) eines Prozessors(BP, CP, IOC) abschaltenden Kommandos,
     - und/oder der Anzahl und/oder Anlässe von eine Bearbeitungswiederholung auslösenden Kommandos,

- und/oder der Anzahl und/oder Anlässe von eine EDC-Fehlerkorrektur auslösenden Vorgängen,
- und/oder der Anzahl und/oder Anlässe von Adressierungen von normalerweise nur bei Notfällen aufgerufene Teilprogramme(z.B.in MB0a/MB0b oder in LMY) betreffenden Kommandos,

entspricht.

6. Verfahren nach einem der vorhergehenden Patentansprüche,
   **dadurch gekennzeichnet**, daß
   * zumindest ein Teil der Kennwerte jeweils mehr oder weniger pauschal der Adresse von aufgerufenen Speicherbereichen entspricht.

## Claims

1. Method for the operation of a fault-protected and highly available multiprocessor central processing unit of a switching system - for example a telephone switching system - containing a plurality of central processors (BP0, BP1, CP0....CP9, IOC0, IOC1.....), in which
   * there are connected to a central bus system (B:CMY0, B:CMY1)
     - one or more memory blocks (MB0a/MB0b, ... MB3a/MB3b) of a central main memory (CMY),
       # which may in themselves be dual and fault-protected, and, apart from a certain slip which may be tolerated, are operated microsynchronously in parallel,
       as well as
     - central processors (BP, CP, IOC),
       # which may in themselves be dual and then - likewise apart from a certain slip which may be tolerated - are operated microsynchronously in parallel,
     which process the multiplicity of the in each case different current switching tasks, and
   * at least a large number of the central processors (BP, CP, IOC) have access to in each case at least one of the memory segments in one of the memory blocks (e.g. MB3a/MB3b) for a read and/or write operation,
   characterised in that
   * as an aid for diagnosing causes of operating errors which occur in individual central processors (BP, CP, IOC) affected in each case, it also being possible for the respective cause to be located outside the affected central processor (BP, CP, IOC),
   - that is to say it may also be located in the other units of the central processing unit which cooperate with them, for example in one of the memory blocks (e.g. in MB3b) of the central main memory (CMY),
   * characteristic values relating to the loads
     - for example relating to dead times without any tasks -
     of at least the majority of said processors (BP, CP, IOC) are logged, each individually or added together, at least regularly at defined time intervals - if not continuously - in separate registers and/or in a separate memory region, and
   * at long time intervals,
     - for example monthly or after a predeterminable counter threshold value of a characteristic value counter has been reached,
     the stored characteristic values
     - for example (only) the sum of the logged characteristic values -
     are output to an output unit (O&M).

2. Method according to Patent Claim 1, characterised in that
   * at least some of the characteristic values correspond in each case to the length of a queue.

3. Method according to Patent Claim 1 or 2, characterised in that
   * at least some of the characteristic values correspond in each case to the duration of task processing operations of the respective processor (e.g. BP).

4. Method according to one of the preceding claims, characterised in that
   * at least some of the characteristic values correspond in each case to the duration and/or the number of accesses to one or more third units (MB3, B:CMY0) of the central processing unit cooperating with the respective processor (e.g. BP).

5. Method according to one of the preceding claims, characterised in that
   * at least some of the characteristic values correspond in each case to the number and/or the triggering causes of specific commands,
     - for example the number and/or causes of addressings of memory segments

5

which are actually illegal for the respective unit (BP, CP, IOC, B:MCY, IOP),

- and/or the number and/or causes of commands switching off one of the two processor units (PU) of a processor (BP, CP, IOC),

- and/or the number and/or causes of commands triggering a processing repetition,

- and/or the number and/or causes of events triggering an EDC error correction,

- and/or the number and/or causes of commands relating to addressings of subroutines (e.g. in MB0a/MB0b or in LMY) normally called up only in emergencies.

6. Method according to one of the preceding claims, characterised in that
   * at least some of the characteristic values correspond in each case more or less across the board to the address of memory regions called up.

## Revendications

1. Procédé pour faire fonctionner une unité de commande centrale à multiprocesseur à haute disponibilité, protégée contre les erreurs et comportant une multiplicité de processeurs centraux (BP0,BP1,CP0...CP9, IOC0, IOC1...) d'un système de commutation -par exemple d'un système de commutationn téléphonique- dans lequel
   * à un système central de bus (B:CMY0,B:CMY1) sont raccordés en parallèle
     - un ou plusieurs blocs (MB0a/MB0b, ... MB3a/MB3b) d'une mémoire principale centrale (CMY),
       # éventuellement prévus en double et protégés contre les erreurs et fonctionnant en parallèle d'une manière microsynchrone, indépendamment d'un certain glissement éventuellement toléré, ainsi que
     - la multiplicité des processeurs centraux (BP,CP,IOC) qui traitent des ordres instantanés de commutation respectivement différents,
       # sont éventuellement prévus en double et fonctionnent alors en parallèle d'une manière microsynchrone -également indépendamment d'un certain glissement éventuellement toléré-, et

* au moins un grand nombre des processeurs centraux (BP,CP, IOC) a accès respectivement à au moins l'une des sections de mémoire dans l'un des blocs de mémoire (par exemple MB3a/MB3b) pour une opération de lecture et/ou d'enregistrement,

caractérisé par le fait que
* en tant qu'aide pour le diagnostic de causes de défauts de fonctionnement qui apparaissent dans des processeurs centraux individuels (BP,CP,IOC) respectivement considérés, la cause respective pouvant également être située en dehors du processeur central considéré (BP,CP,IOC),
   - et pouvant par conséquent également être situées aussi dans les autres éléments qui coopèrent avec les processeurs, de l'unité de commande centrale, par exemple dans l'un des blocs de mémoire (par exemple MB3b) de la mémoire principale centrale (CMY),
* des valeurs caractéristiques concernant les charges
   - par exemple pendant des temps morts sans ordre-

d'au moins une majeure partie de ces processeurs (BP,CP, IOC) sont enregistrés individuellement chacune pour elle ou en étant additionnées, au moins régulièrement, pendant des intervalles de temps définis -même si ce n'est continu- dans des registres particuliers et/ou dans une zone de mémoire particulière, et
* pendant de longs intervalles de temps
   - par exemple chaque mois ou une fois qu'une valeur de seuil préréglée de l'état de comptage d'un compteur de valeurs caractéristiques est atteinte, des valeurs caractéristiques mémorisées,
   - par exemple (uniquement) la somme des valeurs caractéristiques enregistrées - sont délivrées à une unité de sortie (O&M).

2. Procédé suivant la revendication 1, caractérisé par le fait que
   * au moins une partie des valeurs caractéristiques correspond respectivement à la longueur d'une file d'attente.

3. Procédé suivant la revendication 1 ou 2, caractérisé par le fait que
   * au moins une partie des valeurs caractéristiques correspond respectivement à la durée de traitement d'ordres du processeur concerné (par exemple BP).

4. Procédé suivant l'une des revendications précédentes, caractérisé par le fait que
   * au moins une partie des valeurs caractéristiques correspond respectivement à la durée et/ou au nombre des occupations d'un ou de plusieurs troisièmes éléments (MB3, B:CMY0) de l'unité de commande centrale, qui coopèrent avec le processeur considéré (par exemple BP).

5. Procédé suivant l'une des revendications précédentes, caractérisé par le fait que
   * au moins une partie des valeurs caractéristiques correspond respectivement au nombre et/ou aux motifs de déclenchement d'ordres déterminés,
     - par exemple au nombre et/ou aux motifs d'adressage de sections de mémoire en soi interdites pour l'élément concerné (BP,CP,IOC,B:MCY,IOP),
     - et/ou au nombre et/ou aux motifs d'ordres déconnectant l'une des deux unités (PU) d'un processeur (BP,CP,IOC),
     - et/ou au nombre et/ou aux motifs d'ordres déclenchant une répétition de traitement,
     - et/ou au nombre et/ou aux motifs de processus déclenchant une correction d'erreurs EDC,
     - et/ou au nombre et/ou aux motifs d'adressages d'ordres concernant normalement des programmes partiels (par exemple dans MB0a/MB0b ou dans LMY) appelés normalement uniquement dans des cas d'urgence.

6. Procédé suivant l'une des revendications précédentes, caractérisé par le fait que
   * au moins une partie des valeurs caractéristiques correspond respectivement d'une manière plus ou moins aléatoire à l'adresse de zones de mémoire appelées.

BP0    BP1    CP0    CPx    CP9

LMY    LMY    LMY    LMY    LMY

PU    PU    PU    PU    PU

MBG    MBG

IOP·MB    IOP·MB

B·IOC    B·IOC

O&M

IOP    IOP

0    7

IOC0    IOC1

PU    PU

B·CMY0

B·CMY1

MB0a    MB3a    CMY

MB0b    MB3b

EP 0 236 780 B1